# EUROPÄISCHE PATENTANMELDUNG

(11) **EP 2 648 015 A2**
(43) Veröffentlichungstag der Anmeldung: **09.10.2013**
(21) Anmeldenummer: 13159967.2
(22) Anmeldetag: 19.03.2013
(51) Int. Cl.: G01S 7/481, B23K 9/32, G01B 11/00, G02B 27/00

(54) **Schutzvorrichtung für einen berührungslos arbeitenden, insbesondere optischen Prüfkopf sowie Verfahren für dessen Betrieb**

(30) Priorität: 02.04.2012 DE 102012102830
(71) Anmelder: SmartRay GmbH, 82515 Wolfratshausen (DE)
(72) Erfinder: Ritzl, Hans, 82541 Münsing (DE)
(74) Vertreter: Alber, Norbert

(57) **Zusammenfassung**

Bei einem optischen Prüfkopf **(1),** der eine Schweißnaht oder Klebenaht unmittelbar hinter deren Erzeugung kontrollieren soll, besteht das Risiko der Verschmutzung des Prüfkopfes **(1)** durch den Herstellungsvorgang der Naht. Um dies zu verhindern, werden erfindungsgemäß als Schutzvorrichtung entweder ein vor den Fenstern **(8, 9)** des Prüfkopfes **(1)** rotierender Rotor **(33)** oder eine vor den Fenstern **(8, 9)** des Prüfkopfes **(1)** angeordnete durchsichtige Schutzvorrichtung, beispielsweise eine entlang bewegte durchsichtige Schutzfolie **(16),** vorgeschlagen.

## Beschreibung

### I. Anwendungsgebiet

Die Erfindung betrifft eine Schutzvorrichtung für einen berührungslos arbeitenden, insbesondere optischen, Prüfkopf sowie ein Verfahren für den Betrieb der Schutzvorrichtung.

Im Folgenden wird für die Zwecke der vorliegenden Anmeldung immer von einem optischen Prüfkopf gesprochen, auch wenn dieser zwar berührungslos, aber nicht nach optischen Verfahren arbeitet, sondern zum Beispiel nicht sichtbare elektromagnetische Strahlen aussendet, jedoch ohne den Schutz auf einen optischen Prüfkopf zu beschränken.

### II. Technischer Hintergrund

Es sind optische Prüfköpfe bekannt, die - montiert an zum Beispiel einem Roboterarm - zur Überprüfung von zum Beispiel Schweißnähten oder Löt-Nähten oder Klebefugen dienen. Der optische Prüfkopf arbeitet dabei berührungslos nach einem **2**D- oder **3**D-Verfahren und vorzugsweise mittels des Lichtschnitt-Triangulationsverfahrens. Durch ein Austrittsfenster des Prüfkopfes wird dabei ein Lichtstrahl ausgesandt, der nach Reflexion an der zu überprüfenden Oberfläche durch ein Eintrittsfenster wieder in den Prüfkopf eindringt und dort ausgewertet wird.

Wenn dabei die optische Überprüfung unmittelbar bei oder nach der Erzeugung der Schweißnaht oder Lötnaht oder Klebefuge durchgeführt wird, besteht das Problem, dass der optische Prüfkopf durch herumspritzendes Material vom Schweißen, Löten oder Kleben verunreinigt wird.

Dadurch entstehen divergierende Ziele, indem zum einen die Überprüfung des Fertigungsergebnisses möglichst nahe am Fertigungsprozess und damit möglichst schnell erfolgen soll, um Fehler möglichst schnell zu bemerken, andererseits dadurch das Verschmutzungsrisiko des Eintrittsfensters und/oder Austrittsfensters des optischen Prüfkopfes umso größer wird.

### III. Darstellung der Erfindung

### a) Technische Aufgabe

Es ist daher die Aufgabe gemäß der Erfindung, eine Schutzvorrichtung für einen optischen Prüfkopf gegen Verschmutzung zu schaffen, die einfach und kostengünstig herzustellen ist und einen geringen Wartungsaufwand erfordert.

### b) Lösung der Aufgabe

Diese Aufgabe wird durch die Merkmale der Ansprüche **1** und **11** gelöst. Vorteilhafte Ausführungsformen ergeben sich aus den Unteransprüchen.

Im Rahmen der vorliegenden Erfindung werden zwei Lösungen beschrieben, die unterschiedlich ausgestaltet sind, aber der Lösung der gleichen Aufgabe dienen:
Eine erste Möglichkeit für eine solche Schutzvorrichtung gegen Verschmutzungen besteht in einem Rotor, der vor dem Eintrittsfenster und/oder Austrittsfenster rotiert, beispielsweise mit einer Rotationsachse zwischen den beiden Fenstern, sodass beide Fenster - betrachtet in Strahlrichtung - von demselben Propeller abgedeckt werden.

Die Rotorarme bestehen dabei aus einem nicht durchsichtigen Material. Der drehend angetriebene und hinsichtlich seiner Drehlage ständig detektierte Rotor steht jedoch mit der Steuerung des optischen Prüfkopfes in Verbindung, und die einzelnen Aufnahmen, die jeweils nur Millisekunden dauern, werden genau zu den Zeitpunkten durchgeführt, zu denen sich eine Lücke zwischen zwei aufeinander folgenden Rotorblättern des rotierenden Rotors vor dem jeweiligen Fenster befindet.

Dabei ist die Drehzahl des Rotors zusammen mit der Schrägstellung der Rotorblätter und deren Erstreckung in Umfangsrichtung im Vergleich zur AnflugGeschwindigkeit eines Verschmutzungsteilchens so bemessen, dass ein Verschmutzungsteilchen den Rotor nicht durchdringen kann, sondern auf einem Rotorblatt auftrifft und von dort z.B. durch die Fliehkraft vom Rotor nach außen geschleudert wird. Dort können u.U. spezielle Auffangflächen für solche Verschmutzungen vorgesehen sein oder es wird das Auftreffen auf den Bauteilen der Umgebung hingenommen. Zu diesem Zweck beträgt die Drehzahl des Rotors zwischen **2000** und **4000** U/min., besser zwischen **2500** und **3500** U/min.

Der Rotor kann die Form eines Propellers besitzen, in dem die einzelnen Rotorblätter von der Rotorachse radial abstreben, sei es genau in einer Radialebene oder schrägstehend zur Rotationsachse.

Es kann sich also um einen flachen oder um einen kegelförmigen Rotor handeln, bei dem die Rotorblätter in einem Winkel von weniger als **90°** zu ihrer Rotationsachse stehen.

Der Rotor kann jedoch auch topfförmig gestaltet sein, indem vom Rand einer rotierenden, vorzugsweise geschlossenen Rotorplatte aus die Rotorblätter axial, insbesondere parallel zur Rotationsachse der Rotorplatte, abstreben. Ein solcher topfförmiger Rotor kann vor der Seite mit dem Ein- und Austrittsfenster des optischen Prüfkopfes rotieren oder der optische Prüfkopf kann sich im Inneren des Topfes befinden.

Zusätzlich sind die Rotorblätter vorzugsweise so gestaltet oder eingestellt, dass sie eine Luftströmung vom Prüfkopf weg bewirken, und bereits dadurch ein heranfliegendes Verschmutzungsteilchen unter Umständen gar nicht mehr den Rotor erreicht, sondern bereits vorher radial zur Seite hin abgelenkt wird.

Eine solche Luftströmung kann auch durch separate zum Beispiel Druckluftdüsen erzeugt werden, die ebenfalls die Wahrscheinlichkeit des Auftretens von Verschmutzungsteilchen auf einem Rotorblatt vermindern. Solche Druckluftdüsen können am Rotor oder am Gehäuse des Prüfkopfes befestigt sein.

Dabei kann der Rotor - bis auf den Bereich der abzudeckenden Fenster - von einem zusätzlichen, vorzugsweise eigenen, Schutzgehäuse abgedeckt sein, um ihn weitestgehend vor mechanischen Beschädigungen und Verschmutzungen zu schützen.

Als zweite Möglichkeit wird vor allem das meist nahe am abzutastenden Objekt liegende Eintrittsfenster für den z.B. Laserstrahl, bei Bedarf aber auch das weiter entfernt liegende Austrittsfenster, mittels einer schnell wechselbaren, unter Umständen auch automatisch wechselbaren, durchstrahlbaren, insbesondere durchsichtigen, Schutzvorrichtung vor Verschmutzung geschützt, wofür im Rahmen der Erfindung selbständig Schutz begehrt wird.

Dies kann eine einfache, einsteckbare durchsichtige Platte sein, die bei Verschmutzung manuell schnell ausgewechselt werden kann, und die Abmessungen des Prüfkopfes kaum vergrößert.

Wird dagegen mit einer häufigen und laufenden Verschmutzung gerechnet, sind Lösungen zu bevorzugen, bei denen die Entfernung des verschmutzten Bereiches der Schutzvorrichtung automatisch erfolgt, insbesondere ohne den Betrieb des optischen Prüfkopfes zu unterbrechen:
Dies kann beispielsweise ein Band aus einer durchsichtigen Folie sein, die vor dem zu schützenden Fenster entlang gezogen wird, und weiter transportiert wird, entweder sobald dort eine Verschmutzung festgestellt wird oder die grundsätzlich kontinuierlich weiter gezogen wird, beispielsweise indem das Band von einer Vorratsrolle abgewickelt und auf der anderen Seite des Fensters auf einer Aufwickel-Rolle die verschmutzte Folie aufgewickelt wird, wobei diese Aufwickel-Rolle dann gesteuert motorisch antreibbar ist.

Eine solche Anordnung aus Vorratsrolle und Aufwickelrolle mit einer durchsichtigen Folie kann als Kassette hergestellt sein, die auf das Gehäuse des optischen Prüfkopfes einfach aufgesteckt und verrastet und dadurch sehr leicht ausgewechselt werden kann.

Falls eine Verschmutzung der durchsichtigen Schutzvorrichtung im Einzelfall detektiert werden soll und die durchstrahlbare Schutzvorrichtung nicht kontinuierlich oder in festen Zeitabständen vorsorglich gewechselt werden soll, kann zur Ermittlung der Verschmutzung die Schutzvorrichtung von der Seite des optischen Sensors mittels einer Lichtquelle, z.B. einer Leucht-Diode, beleuchtet werden, sodass bei unverschmutzter Schutzvorrichtung dieses Licht durch die Schutzvorrichtung nach außen dringt, im verschmutzten Zustand jedoch an den verschmutzten Bereichen reflektiert wird zurück zum optischen Sensor und dort somit die Verschmutzung detektiert werden kann.

Für den Betrieb des optischen Prüfkopfes ist eine solche Lichtquelle in der Regel unschädlich, da der optische Prüfkopf ohnehin einen optischen Filter vor dem optischen Sensor umfasst, der nur die Wellenlänge des benutzten Laserlichts durchlässt. Dann befindet sich die beleuchtete Schutzvorrichtung vorzugsweise im Bereich zwischen dem optischen Filter und dem optischen Sensor der optischen Einheit.

Bei der Anwendung der ersten Möglichkeit ist hinsichtlich der Vorgehensweise darauf zu achten, dass die Drehzahl und Drehlage des Rotors auf die Zeitpunkte des Aussendens und Empfangens von Lichtstrahlen durch den optischen Prüfkopf so aufeinander abgestimmt werden, beispielsweise mit einer gemeinsamen Steuerung, dass die ausgesandten und auch die eintreffenden Lichtstrahlen genau durch die Lücken zwischen den Rotorblättern des rotierenden Rotors hindurchtreten können.

Zusätzlich soll vorzugsweise der Rotor dabei eine so hohe Drehzahl besitzen, dass ein in Richtung auf den optischen Prüfkopf fliegendes Verschmutzungsteilchen den Rotor nicht durchdringen kann, sondern entweder von dem vom Rotor erzeugten Luftstrom so stark abgelenkt wird, dass es auf den Rotor nicht auftrifft, oder im Falle des Erreichens des Rotors auf einem Rotorblatt aufschlägt und nicht eine Lücke dazwischen durchdringen kann. Auch hierfür ist die Relation zwischen der Geschwindigkeit des Rotorblattes, seiner Dimensionierung und der Anfluggeschwindigkeit des Verschmutzungsteilchens relevant und zu berücksichtigen.

Um die Gefahr eines Hindurchtretens von Verschmutzungsteilchen durch den Rotor zu minimieren, werden die Lücken zwischen den Rotorblättern so gering wie möglich gewählt.

### c) Ausführungsbeispiele

Ausführungsformen gemäß der Erfindung sind im Folgenden beispielhaft näher beschrieben. Es zeigen:
- Fig. **1**a-c:: eine Anordnung mit einem einfachen Rotor,
- Fig. **2**a, b:: eine erste Anordnung mit einem topfförmigen Rotor,
- Fig. **3**:: eine zweite Anordnung mit einem topfförmigen Rotor,
- Fig. **4**:: eine Anordnung mit wechselbaren Platten und
- Fig. **5**a, b:: eine Anordnung mit einer wickelbaren Folie.

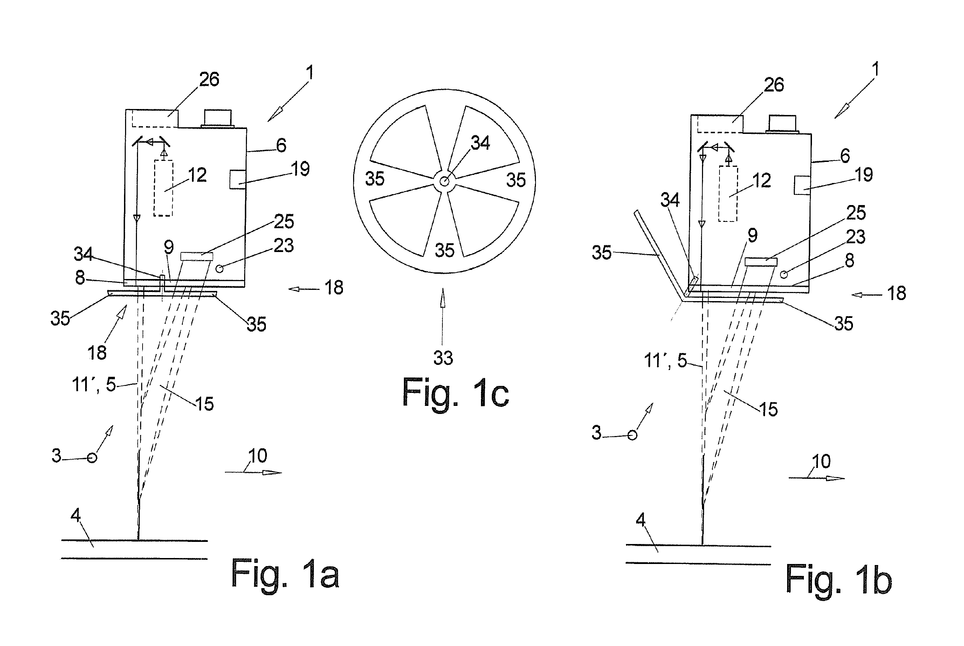

Die **Figuren 1a****,b** zeigen zwei Varianten einer Schutzvorrichtung **18,** die darin besteht, dass ein Rotor **33 -** wie in Figur **1c** dargestellt - vor dem Austrittsfenster **8** und dem Eintrittsfenster **9** eines optischen Prüfkopfes **1** rotiert angetrieben von einem nicht dargestellten, angesteuerten Motor, wobei es prinzipiell egal ist, welche Form das Gehäuse **6** dieses optischen Prüfkopfes besitzt.

In diesem Fall handelt es sich bei dem Rotor **33** um die klassische Form, bei der die Rotorblätter **35** radial von der Rotorachse **34** abstreben. Die freien Enden der Rotorblätter **35** sind mittels eines Außenringes zur Verbesserung der Stabilität miteinander verbunden, was jedoch nicht zwingend notwendig ist.

In beiden Fällen ist der Rotor **33** am Gehäuse **6** des optischen Prüfkopfes **1** drehbar befestigt und gesteuert antreibbar, und zwar mit der Rotorachse **34** zwischen den beiden Fenstern **8** und **9.** Er könnte jedoch auch an einem anderen Bauteil außerhalb des Gehäuses **6** drehbar gelagert sein.

Bei der Lösung der **Figur 1a** liegen die Rotorblätter **35** in einer Radialebene zur Achse **34,** und rotieren in geringem Abstand vor der Seite des Gehäuses, und parallel zu dieser, in dem sich das Austrittsfenster **8** und dass Eintrittsfenster **9** befindet.

Bei der Lösung gemäß **Figur 1b** ragen die Rotorblätter **35** schräg von der Rotationsachse **34** ab, also mit einem spitzen Winkel dazwischen. Der Rotationskegel liegt auf der einen Seite mit geringem Abstand vor der Seite des Gehäuses, in der sich das Eintrittsfenster **9** befindet, und läuft schräg zu der angrenzenden anderen Gehäuseseite. Dadurch wird ein zu großer seitlicher Überstand über die Seitenwand des Gehäuses vermieden.

Diese Bauform empfiehlt sich, wenn Austrittsfenster **8** und Eintrittsfenster **9** nicht in der gleichen Ebene, zum Beispiel nicht in der gleichen Wand des Gehäuses **6,** angeordnet sind.

Wichtig ist lediglich, dass bei beiden Varianten die Rotorblätter **35** ausreichend lang sind, um in radialer Richtung beide Fenster **8, 9** abzudecken.

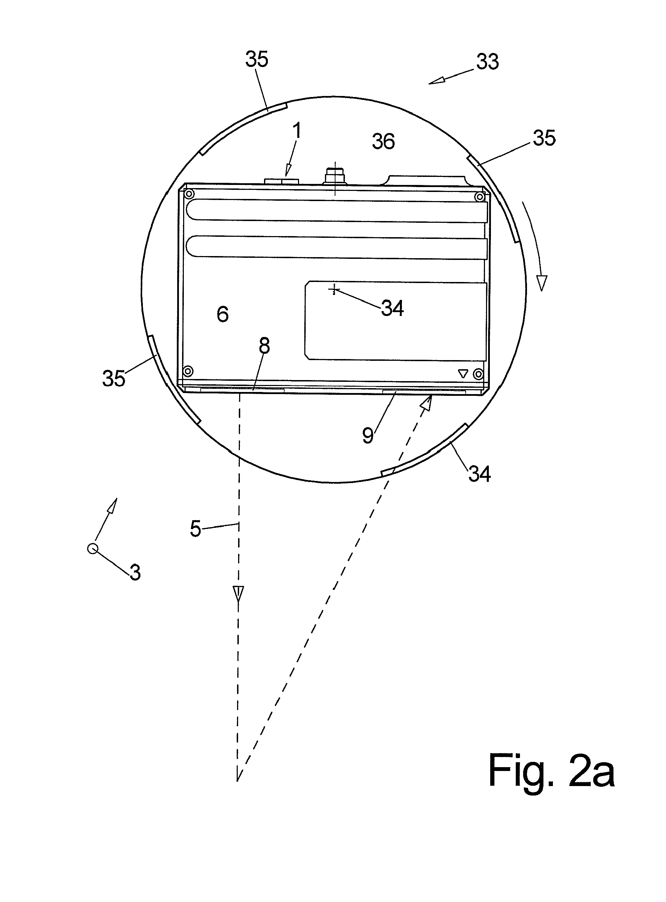

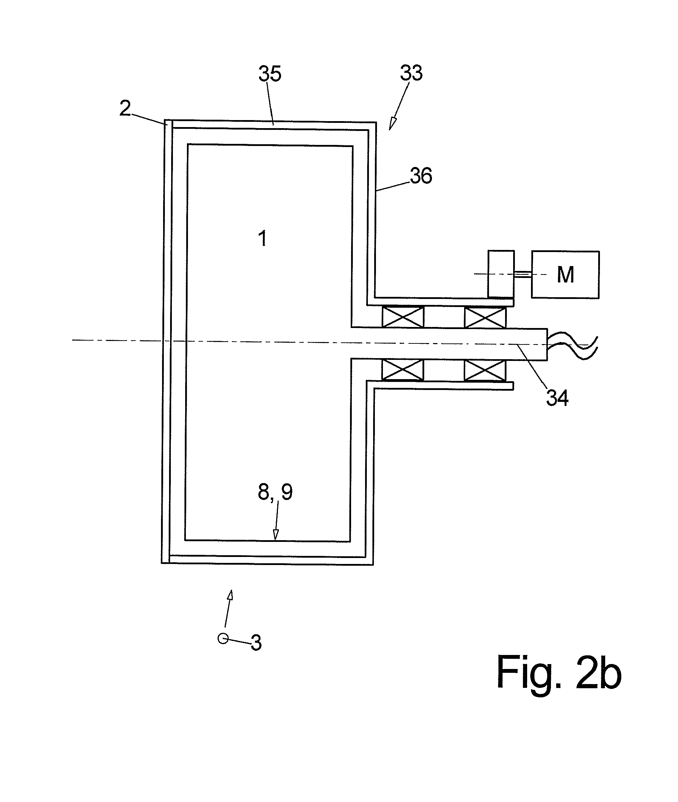

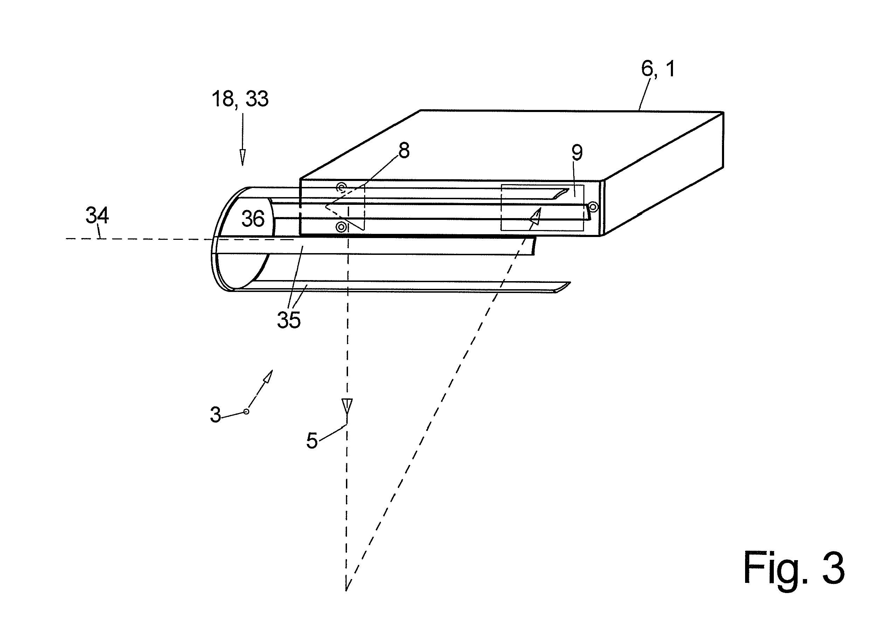

Die **Figuren 2a****, b und 3** zeigen Ausführungsformen mit einem grundsätzlich anders gestalteten Rotor **33:**

Dieser besteht aus einer vorzugsweise geschlossenen Rotorscheibe **36,** welche um eine Rotorachse **34** rotiert, die lotrecht zur Ebene der Rotorscheibe **36** steht. Die Rotorblätter **35** ragen vom Rand der in der Regel runden Rotorscheibe **36** aus axial ab, erstrecken sich also parallel zur Rotorachse **34.**

Am Beispiel eines etwa rechteckigen Gehäuses **6** eines optischen Prüfkopfes **1** ist in **Figur 2a****, b** der bevorzugte Fall dargestellt, dass der optische Prüfkopf **1** mit dem Gehäuse **6** im topfförmigen Inneren dieses Rotors **33** positioniert ist, und die Länge der Rotorblätter **35** mindestens so groß ist, dass sie in Richtung ihrer Erstreckung wenigstens das Austrittsfenster **8** und Eintrittsfenster **9** des optischen Prüfkopfes **1** abdecken. Vorzugsweise findet der gesamte Prüfkopf **1** im Inneren des topfförmigen Rotors **33** Platz.

Je nach Form des Gehäuses **6** ergibt dies eine sehr raumsparende Lösung, wobei die offene Seite des topfförmigen Rotors **33** unter Umständen durch einen stillstehenden Deckel **2** ganz oder teilweise verschlossen werden kann, und dadurch ein weiterer Schutz des optischen Prüfkopfes **1** vor Verschmutzung gegeben ist.

Die **Figur 3** zeigt eine Lösung, bei der der optische Prüfkopf **1** nicht im Inneren des topfförmigen Rotors **33** angeordnet ist, sondern der topfförmige Rotor im Abstand vor derjenigen Seite des Gehäuses **6** rotiert, in der sich das Austrittsfenster **8** sowie das Eintrittsfenster **9** befinden. Diese Lösung ist beispielsweise bei sehr flachen, plattenförmigen Gehäusen **6** der optischen Prüfkopf **1** vorteilhaft.

Auch hier muss der Durchmesser der Rotorscheibe **36** und die Länge der Rotorblätter **35** so bemessen sein, dass sie bei Rotation die Gehäuseseite mit Austrittsfenster **8** und Eintrittsfenster **9** vollständig überdecken.

In allen Fällen ist vorzugsweise beabsichtigt, dass während des Zeitraumes einer Messung, die ja nur Millisekunden beträgt, gerade kein Rotorblatt **35** vor den Fenstern **8, 9** vorbeiläuft, sondern sich vor beiden Fenstern **8, 9** jeweils eine Lücke, vorzugsweise die gleiche Lücke, zwischen zwei Rotorblättern **35** befindet.

Somit muss die Drehzahl des Rotors **33** in Abstimmung mit den Abmessungen der Rotorblätter **35** und Positionierung des Rotors **33** zum optischen Prüfkopf **1** so festgelegt werden, dass während der Zeit einer Messung kein Rotorblatt **35** in den Bereich vor einem der Fenster eintaucht und andererseits muss die Drehzahl des Rotors **33** so hoch gesetzt werden, dass ein mit einer in der Regel bekannten Fluggeschwindigkeit auf den Rotor **33** zufliegendes Verschmutzungsteilchen **3** nicht durch die Lücke zwischen zwei Rotorblättern **35** hindurch gelangen kann, sondern immer auf ein Rotorblatt 35 trifft und von diesem weg geschleudert wird.

Dies kann zusätzlich unterstützt werden durch eine entsprechende Querschnittsform der Rotorblätter **35,** beispielsweise nach Art eines Flugzeugflügels, mit einem Profil, welches einen vom Rotor **33** weg gerichteten Luftstrom erzeugt und/oder durch einen mittels Düsen und Druckluft erzeugten Luftstrom die heranfliegenden Verschmutzungsteilchen ebenfalls von den Fenstern **8, 9** weg leiten.

Solche Druckluftdüsen sind vorzugsweise am Gehäuse **6** des optischen Prüfkopfes **1** angeordnet, können jedoch auch am Rotor **33** angeordnet sein. Ihre konkrete Positionierung hängt stark von der Form des Gehäuses **6** und der Form des verwendeten Rotors **33** ab.

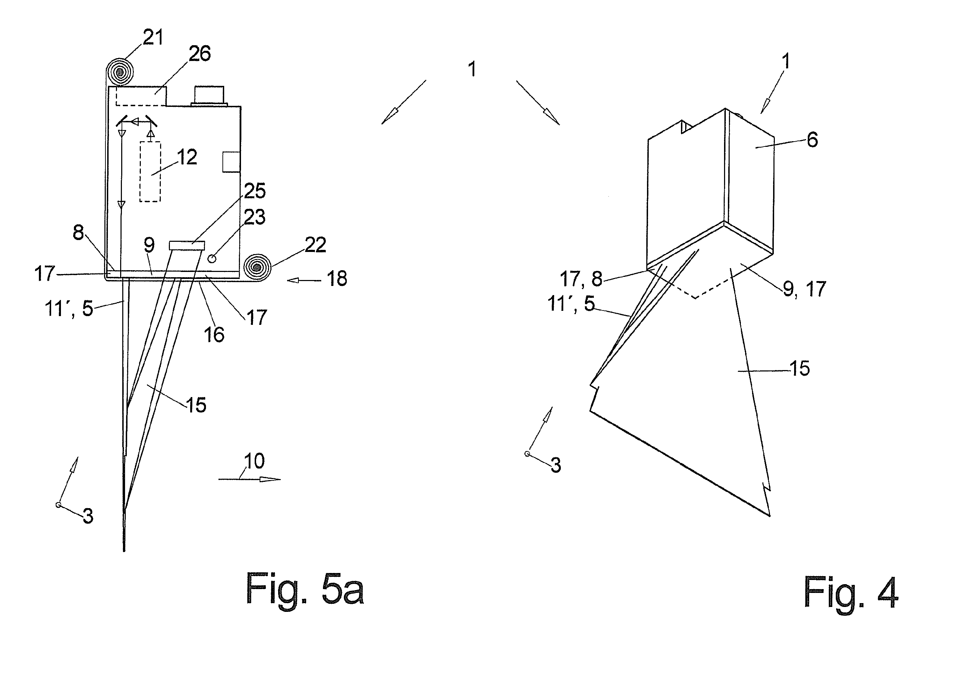

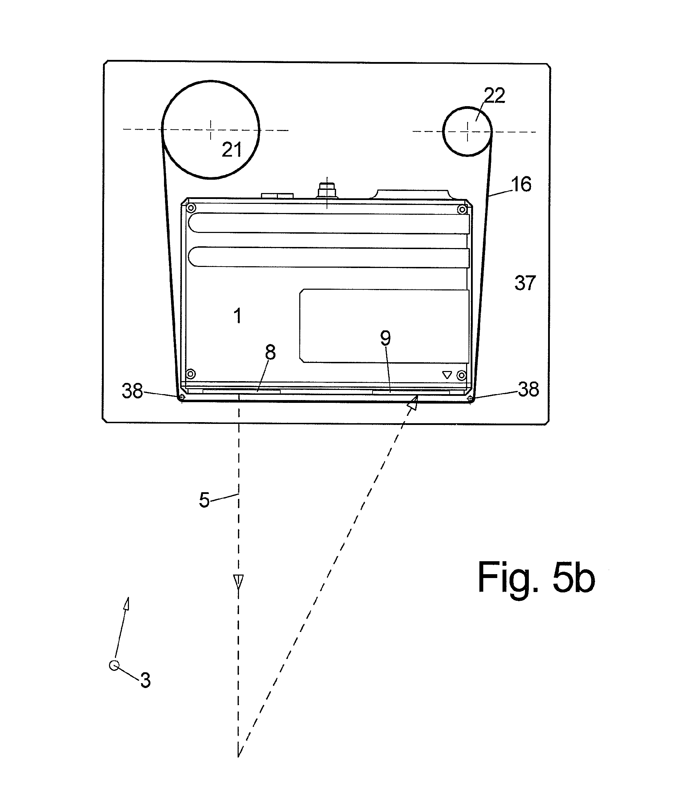

Ein einzelner optischer Prüfkopf **1** mit unterschiedlich geformtem Gehäuse **6** und mit einer anderen Art einer Schutzvorrichtung **18,** nämlich einer nicht rotierenden Bauform, ist in den **Figuren 4** **sowie 5a und 5b** dargestellt, und zwar in Figur **5a** genau mit Blick in Richtung der Querebene 11', die lotrecht zur Fahrtrichtung **10** liegt.

Der optische Prüfkopf **1** der Figuren **4** und **5a** ist in einem Gehäuse **6** angeordnet, in dessen einer Seitenwand das Austrittsfenster **8** und das Eintrittsfenster **9** angeordnet sind.

Im Inneren des Gehäuses **6** ist z.B. eine meist längliche Laserlichtquelle **12** angeordnet, und der von dort nach oben austretende Laserstrahl **5** wird über zwei Umlenkspiegel um **2 x 90°** umgelenkt, sodass er über Austrittsfenster **8** austritt und sich in der Querebene **11 -** aufgefächert zu einem in dieser Ebene liegenden Fächer **5 -** gegen das abzutastende Objekt, zum Beispiel eine Kleber-Raupe **4** wie in Figur **1a** dargestellt, gerichtet wird und von deren Oberfläche reflektiert wird.

Der reflektierte, ebenfalls fächerförmige Strahl **15** wird von einem optischen Sensor **25,** beispielsweise einem CCD-Sensor, der im Inneren des Gehäuses **6** hinter dem Eintrittsfenster **9** angeordnet ist, aufgenommen.

Das Eintrittsfenster **9** befindet sich dabei in der Unterseite des Gehäuses **6,** neben dem Austrittsfenster **8.**

Beide Fenster sind mittels einer zweiten Bauform der Schutzvorrichtung **18** vor dauerhafter Verschmutzung gesichert:
Dies können entweder gemäß **Figur 4** vor die einzelnen Fenster **8, 9** einschiebbare und daher leicht wechselbare Einsteckplatten **17** aus für das Laserlicht durchsichtigem Material sein, die nach Verschmutzung getauscht werden.

Da dies eine manuelle Arbeit ist, die zu einer Unterbrechung des Einsatzes des Prüfkopfes **30** führt, ist die in **Figur 5a** dargestellte automatisch arbeitende Schutzvorrichtung **18** zu bevorzugen:
Dabei wird eine für den Laserstrahl durchsichtige Folie **16** vor dem Austrittsfenster **8** und/oder dem Eintrittsfenster **9 -** vorzugsweise hinter beiden nacheinander in dieser Reihenfolge - entlang geführt, so dass auftreffende Verschmutzungen sich auf dieser Folie **16**ablagern.

Die Folie **16** kann auf einer Vorratsrolle **21** bevorratet sein und weiter gewickelt werden auf eine Aufwickelrolle **22,** wodurch über einen langen Betriebszeitraum saubere unverschmutzte Folie **16** zur Verfügung steht. Das Weiterführen der Folie **16** kann durch ein gesteuertes motorisches Antreiben der Aufwickelrolle **22** automatisch und während des Betriebes durchgeführt werden.

Dabei kann die Folie je nach vorhandenem Platz innerhalb des Gehäuses **6** geführt werden und/oder auch die Rollen **21, 22** im Inneren des Gehäuses angeordnet werden, und lediglich im Bereich der Fenster **8, 9** müssen sich die Folien außerhalb der Fenster befinden und geführt sein.

Allerdings ist es für das Auswechseln der Folie **16** vorteilhaft, deren Führungen als auch die Rollen **21, 22** außen am Gehäuse **6** der optischen Prüfkopfes **1** zu befestigen.

**Figur 5b** zeigt dabei eine Lösung, bei der die Rollen **21, 22** sowie die Führungen **38** für die Folie **16** in einer Kassette **37** angeordnet sind, die einen z.B. einseitig offenen Freiraum aufweist entsprechend der Form des optischen Prüfkopfes **1,** sodass die Kassette **37** formschlüssig auf den Prüfkopf **1** aufgesteckt und z.B. verrastet werden kann und dadurch die Folie **16** positionsgenau vor den Fenstern **8, 9** liegt.

### BEZUGSZEICHENLISTE

- **1**: optischer Prüfkopf
- **2**: Deckel
- **3**: Verschmutzungsteilchen
- **4**: Raupe
- **5**: Laserstrahl, Fächer
- **6**: Gehäuse
- **7**: Absatz
- **8**: Austrittsfenster
- **9**: Eintrittsfenster
- **10**: Fahrtrichtung
- **11'**: Ebene, Querebene
- **12**: Laserlicht-Quelle
- **15**: reflektierter Strahl
- **16**: Folie
- **17**: Einsteck-Platte
- **18**: Schutzvorrichtung
- **19**: Steuerung
- **21**: Vorrats-Rolle
- **22**: Aufwickel-Rolle
- **23**: Lichtquelle
- **25**: optischer Sensor
- **26**: Auswerte-Elektronik
- **33**: Rotor
- **34**: Rotorachse
- **35**: Rotorblatt
- **36**: Rotorscheibe
- **37**: Kassette
- **38**: Führungen

## Patentansprüche

1. Schutzvorrichtung für einen berührungslos arbeitenden, insbesondere optischen, Prüfkopf **(1)** der zu Prüf-Zwecken, veranlasst durch eine Steuerung, elektromagnetische Strahlen, insbesondere Lichtstrahlen, aus einem Austrittsfenster **(8)** aussendet und/oder über ein Eintrittsfenster **(9)** empfängt
**dadurch gekennzeichnet, dass**
die Schutzvorrichtung **(18)** einen gesteuert antreibbaren Rotor **(33)** mit Rotorblättern **(35)** umfasst, der sich vor dem Austrittsfenster **(8)** und/oder dem Eintrittsfenster **(9)** dreht und so angetrieben wird, dass der Durchgang des Lichtstrahls und/oder des reflektierten Strahls zeitlich koordiniert genau auf den Zwischenraum zwischen zwei aufeinander folgenden Rotorblättern **(35)** des rotierenden Rotors **(33)** erfolgt, und der Antrieb sowie die Drehlagenerfassung des Rotors **(33)** gekoppelt ist mit der Steuerung des optischen Prüfkopfes **(1).**

2. Schutzvorrichtung nach Anspruch **1,**
**dadurch gekennzeichnet, dass**
die Rotorblätter **(35)** so gestaltet oder schräg gestellt sind, dass sich eine Luftströmung in Richtung des abzutastenden Objektes, also von dem optischen Prüfkopf **(1)** weg, bewirkt wird.

3. Schutzvorrichtung nach einem der vorhergehenden Ansprüche,
**dadurch gekennzeichnet, dass**
die Drehzahl des Rotors **(33)** in Relation zur Dimensionierung des Rotors (33) so hoch ist, dass Verschmutzungsteilchen den Rotor nicht durchdringen können und insbesondere auf dem Rotorblatt **(35)** auftreffende Verschmutzungsteilchen radial weggeschleudert werden und sich nicht festsetzen können, und insbesondere die Drehzahl des Propellers **(33)** zwischen **2000** und **4000** U/min., besser zwischen **2500** und **3500** U/min., beträgt.

4. Schutzvorrichtung nach einem der vorhergehenden Ansprüche,
**dadurch gekennzeichnet, dass**
die Rotorachse **(34)** zwischen dem Eintrittsfenster **(9)** und dem Austrittsfenster **(8)** des Prüfkopfes **(1)** angeordnet ist und der Rotor **(33)** beide Fenster abdeckt.

5. Schutzvorrichtung nach einem der vorhergehenden Ansprüche,
**dadurch gekennzeichnet, dass**
die Rotorblätter **(35)** in einem Winkel von < als **90°** zur Rotorachse **(34)** stehen.

6. Schutzvorrichtung nach einem der vorhergehenden Ansprüche,
**dadurch gekennzeichnet, dass**
die Rotorblätter **(35)** vom Rand einer Rotorscheibe **(36)** oder eines Rotorringes aus parallel zur Rotorachse **(34)** abstreben, und die Rotorblätter **(35)** vor dem Eintrittsfenster **(9)** und Austrittsfenster **(8)** rotieren, und insbesondere der Rest des optischen Prüfkopfes sich innerhalb des Rotationskreises der Rotorblätter **(35),** bevorzugt nahe an der Rotorscheibe **(36),** angeordnet ist.

7. Schutzvorrichtung für einen berührungslos arbeitenden, insbesondere optischen, Prüfkopf **(1)** der zu Prüf-Zwecken, veranlasst durch eine Steuerung, elektromagnetische Strahlen, insbesondere Lichtstrahlen, aus einem Austrittsfenster **(8)** aussendet und/oder über ein Eintrittsfenster **(9)** empfängt
**dadurch gekennzeichnet, dass**
wenigstens das Eintrittsfenster **(9)** und/oder das Austrittsfenster **(8)** des Prüfkopfes **(1)** von einer durchstrahlbaren, insbesondere durchsichtigen, Schutzvorrichtung **(18)** geschützt ist.

8. Schutzvorrichtung nach Anspruch **7,**
**dadurch gekennzeichnet, dass**
die Schutzvorrichtung **(18)** eine Einsteck-Platte **(17)** oder eine insbesondere wickelbare Folie **(16)** ist, die von einer Vorratsrolle **(21)** auf der einen Seite zu einer Aufwickel-Rolle **(22)** auf der anderen Seite des jeweiligen Fensters **(8, 9)** transportiert wird, wobei wenigstens die Aufwickel-Rolle **(22)** gesteuert motorisch antreibbar ist.

9. Schutzvorrichtung nach einem der vorhergehenden Ansprüche **7** oder **8,**
**dadurch gekennzeichnet, dass**
die Folie **(16)** bis auf den Bereich vor dem jeweiligen Fenster **(8, 9)** innerhalb eines Gehäuses **(6),** insbesondere des Gehäuses **(6)** der optischen Einheit **(2a,b),** geführt wird, insbesondere auch die beiden Rollen **(21, 22)** für die Folie **(16)** innerhalb eines Gehäuses **(6)** untergebracht sind.

10. Schutzvorrichtung nach einem der vorhergehenden Ansprüche **7** bis **9,**
**dadurch gekennzeichnet, dass**
die durchsichtige Schutzvorrichtung **(18)** von der Seite des optischen Sensors **(25)** her durch eine Lichtquelle **(23)** so beleuchtet ist, dass das von einer undurchsichtigen Ablagerung auf der Vorderseite der Schutzvorrichtung **(18)** reflektierte Licht auf dem optischen Sensor **(25)** auftrifft.

11. Verfahren zum Benutzen einer Schutzvorrichtung, insbesondere nach einem der Ansprüche **1** bis **6,** mit folgenden Schritten:
- die Drehung des Rotors **(33)** hinsichtlich Drehzahl und Drehlage permanent an die Steuerung gemeldet wird,
- das Aussenden und/oder Empfangen von Lichtstrahlen in zeitlicher Hinsicht durch die Steuerung so gesteuert wird, dass die Lichtstrahlen genau durch die Lücken zwischen den Rotorblättern **(35)** hindurch verlaufen.

12. Verfahren nach Anspruch **11,**
**dadurch gekennzeichnet, dass**
der Rotor **(33)** so schnell gedreht wird, dass ein gegen den optischen Prüfkopf **(1)** heranfliegendes Verschmutzungsteilchen den Rotor **(33)** nicht durchdringen kann sondern auf den Rotor **(33)** auftrifft und an diesem haften bleibt oder gegebenenfalls von diesem nach außen weggeschleudert wird.

13. Verfahren nach einem der vorhergehenden Verfahrensansprüche,
**dadurch gekennzeichnet, dass**
die Rotorblätter **(35)** so geformt sind oder eingestellt werden, dass sie eine vom Rotor **(33)** weg gerichtete Luftströmung erzeugen.

14. Verfahren nach einem der vorhergehenden Verfahrensansprüche,
**dadurch gekennzeichnet, dass**
die Lücken zwischen den Rotorblättern **(35)** so gering wie möglich dimensioniert werden.
